(19) Europäisches Patentamt
European Patent Office
Office européen des brevets

(11) Veröffentlichungsnummer : **0 188 204**
**B1**

(12) # EUROPÄISCHE PATENTSCHRIFT

(45) Veröffentlichungstag der Patentschrift : **15.06.88**

(51) Int. Cl.[4] : **C 08 G 63/62**

(21) Anmeldenummer : **86100098.2**

(22) Anmeldetag : **07.01.86**

(54) **Verfahren zur Herstellung von duromeren aliphatischen Polycarbonaten.**

(30) Priorität : **16.01.85 DE 3501246**

(43) Veröffentlichungstag der Anmeldung : **23.07.86 Patentblatt 86/30**

(45) Bekanntmachung des Hinweises auf die Patenterteilung : **15.06.88 Patentblatt 88/24**

(84) Benannte Vertragsstaaten : **DE FR GB IT**

(56) Entgegenhaltungen :
**DE-A- 3 103 135**
**PATENT ABSTRACTS OF JAPAN, Band 4, Nr. 135 (C-25)[617], 20. September 1980; & JP - A - 55 86817 (NIPPON ESTER) 01.07.1980**

(73) Patentinhaber : **BAYER AG**
**Konzernverwaltung RP Patentabteilung**
**D-5090 Leverkusen 1 Bayerwerk (DE)**

(72) Erfinder : **Mues, Peter, Dr.**
**Weihers Hecke 30**
**D-4100 Duisburg 46 (DE)**
Erfinder : **Buysch, Hans-Josef, Dr.**
**Brandenburger Strasse 28**
**D-4150 Krefeld (DE)**
Erfinder : **Brassat, Bert, Dr.**
**Bodelschwinghstrasse 30**
**D-4150 Krefeld (DE)**
Erfinder : **Heine, Heinrich, D.I.**
**Mueritzstrasse 38**
**D-5090 Leverkusen 1 (DE)**

**EP 0 188 204 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von duromeren aliphatischen Polycarbonaten aus cyclischen aliphatischen Kohlensäureestern durch ringöffnende Polymerisation.

Es ist bekannt, daß cyclische Carbonate durch alkalisch reagierende Verbindungen, z. B. Kaliumcarbonat bei erhöhter Temperatur (130 °C) polymerisiert werden können (J. Am. Chem. Soc. 52, 314 (1930)).

In DE-OS 1 545 116, 1 545 117 und 1 545 118 werden Alkalimetallverbindungen, Metallalkoholate und -amide als besonders geeignete Katalysatoren für diese Reaktion genannt, die schon bei niedrigeren Temperaturen (ca. 90 °C) verwendet werden können.

Für die Herstellung duromerer aliphatischer Polycarbonate durch ringöffnende Copolymerisation mono- und bifunktioneller, d. h. vernetzender Ringcarbonate sind diese Katalysatoren ungeeignet, da sie zur Bildung mehrphasiger Systeme führen, die entweder keine oder nur eine unkontrollierte Polymerisation auslösen. Nicht reproduzierbare Polymerisationen und ungleichmäßig durchpolymerisierte Produkte sind das Resultat. In anderen Fällen werden in Folge starker $CO_2$-Abspaltung während der Polymerisation nur blasenhaltige Produkte gebildet.

Die DE-OS 3 103 135 und 3 204 078 beschreiben die Verwendung alkalisch reagierender Thallium-Verbindungen zur Polymerisation cyclischer Carbonate. Dieser Katalysator kann zur Herstellung duromerer Produkte nur sehr begrenzt verwendet werden, da die Polymerisation auch hier nicht in allen Fällen redproduzierbar verläuft. Besonders nachteilig ist jedoch, daß in Gegenwart üblicher Füllstoffe und Verstärkermaterialien für Duromere, z. B. Quarzsand und Glasfaser mit dieser Tl-Verbindung keine Polymerisation abläuft.

Es war daher wünschenswert, ein Verfahren zu entwickeln, das eine reproduzierbare Herstellung, auch verstärkter Duromerer, durch ringöffnende Polymerisation cyclischer Kohlensäureester gestattet.

Es wurde nun ein Verfahren gefunden, das die Herstellung von duromeren, gegebenenfalls verstärkten aliphatischen Polycarbonaten durch ringöffnende Copolymerisation von monocyclischen Ringcarbonaten und bifunktionellen vernetzend wirkenden Ringcarbonaten gestattet durch Verwendung von Katalysatorsystemen, bestehend aus einem Katalysator der allgemeinen Formel (I)

$$X(R^1)_y \qquad (I),$$

worin

X ein Ion der Gruppen IA-IIIA, IIIB oder VA des Periodensystems (Chemiker-Kalender, S.2, [2]1974, Springer Verlag),

$R^1$ einen $C_1$-$C_8$-Alkylalkoholat-, $C_7$-$C_{15}$-Aralkylalkoholat-, $C_4$-$C_{18}$-Thiolat-, Cyanid-, Cyanat-, Thiocyanat-, aliphatischen ($C_1$-$C_8$) Carboxylat-, aromatischen (gegebenenfalls durch Brom, Chlor, eine $C_1$-$C_4$-Alkyl-, Nitro-, Trifluormethyl-, Alkoxygruppe mit 1 bis 4 C-Atomen oder Carbalkoxygruppe substituierten) Carboxylat-, Carbonat-, $C_1$-$C_8$-Alkylcarbonat-, Oxid-, Halogenid, $C_1$-$C_4$-Alkyl-Rest,

Y 1, 2, 3 oder 4

bedeuten,

oder einem Katalysator der Formel (II)

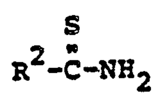

(II)

worin

$R^2$ $C_1$-$C_4$-Alkyl, —$NH_2$, —NH-Alkyl($C_1$-$C_4$), —N(Alkyl($C_1$-$C_4$))$_2$, —$NHNH_2$ bedeutet, und einem Cokatalysator, ausgewählt aus der Gruppe, welche einer der Formeln IIIa, aliphatischen Säureamiden,

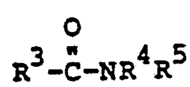

(IIIa)

in welcher

$R^3$ für $C_1$-$C_5$-Alkyl,

$R^4$ und $R^5$ für Wasserstoff, $C_1$-$C_4$-Alkyl stehen,

IIIb, cyclischen Amiden

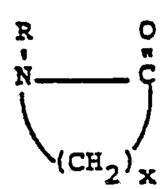

(IIIb)

in welcher
$R^4$ die bei Formel IIIa angegebene Bedeutung hat und
X für eine ganze Zahl von 3 bis 6 steht,
IIIc, cyclischen Aminen,

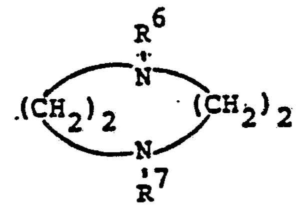

(IIIc)

in welcher
$R^6$ und $R^7$ für Wasserstoff, $—CH_3$, $—C_2H_4OH$ oder gemeinsam für eine gesättigte Methylenkette mit 2 bis 4 C-Atomen stehen,
IIId, bicyclischen Amidinen,

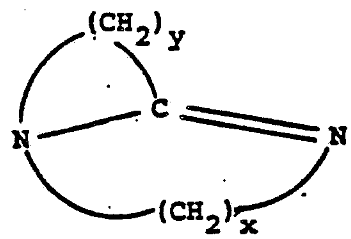

(IIId)

in welcher X, Y für eine ganze Zahl von 2 bis 5 stehen, oder IIIe, acyclischen und cyclischen Harnstoffen

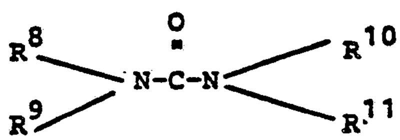

(IIIe)

in welcher $R^8$ bis $R^{11}$ Wasserstoff, $C_1$-$C_4$-Alkyl, $C_6$-$C_{10}$-Aryl bedeuten, wobei gegebenenfalls die Stickstoffatome über zwei Reste $R^8$, $R^{10}$ bzw. $R^9$, $R^{11}$ über eine $C_2$ bis $C_4$ Kette miteinander zu einem Ring verknüpft sein können, entsprechen, oder der Formel (IV)

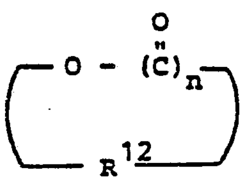

(IV)

worin
$R^{12}$ $—(CH_2)_s—$ mit s = 2-5 für den Fall n = 1 und $—(CH_2CH_2O\text{-})_t CH_2CH_2—$ mit t = 1-6 für den Fall n = 0
und
n 0 oder 1 bedeuten,
oder der Formel (V)

$$R^{13}—ZH \qquad (V),$$

worin

$R^{13}$ $—CH_2CH_2OH$, $—(CH_2CH_2)_v—OH$, 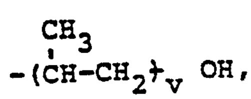

$C_4$-$C_{12}$-Alkyl oder einen Phenylring (gegebenenfalls durch Brom, Chlor, eine $C_1$-$C_4$-Alkyl-, Nitro-,

Trifluormethyl-, Alkoxygruppe mit 1 bis 4 C-Atomen oder Carbalkoxygruppe substituiert)
v 1-200,
z 0 und S bedeuten,
entspricht.

Als Katalysatoren der allgemeinen Formel (I) seien beispielsweise erwähnt :

Die Alkalimetallalkoholate, wie z. B. Li-, Na-, K-ethylat, -butylat, -isobutylat, -tert.-butylat, -octylat, -iso-octylat, dodecylat, bevorzugt die erwähnten Kaliumalkoholate, besonders bevorzugt Kalium-tert.-butylat, -octylat und -iso-octylat ; die Alkalimetallaralkylalkoholate, wie z. B. die Li-, Na-, K-Salze von Benzylalkohol, α-Hydroxy-ethyl-p-ethylbenzol, α-Hydroxyethyl-O-ethylbenzol, α-Hydroxy-ethyl-o,p-diethylbenzol, α-Hydroxyisopropyl-p-tert.-butylbenzol, α-Hydroxyisopropyl-p-isopropylbenzol, α-Hydroxyisopropyl-p-methylbenzol, α-Hydroxy-isopropyl-o,p-di-tert.-butylbenzol, α-Hydroxy-isopropyl-o,p-diisopropylbenzol, α-Hydroxy-isobutyl-p-tert.-butylbenzol, bevorzugt die Na- und K-Salze von α-Hydroxy-isopropyl-p-isopropylbenzol, α-Hydroxy-isopropyl-p-tert.-butylbenzol und α-Hydroxy-isopropyl-o,p-di-tert.-butylbenzol ; die Alkalimetallthiolate, wie z. B. Na-, K-thiobutanolat, -thiophenolat, -thiododecanolat, -thiostearylat, bevorzugt die erwähnten Kaliumthiolate, besonders bevorzugt Kaliumthiophenolat und -thiododecanolat : die Alkalimetallcyanide, -cyanate und thiocyanate, wie z. B. Li-, Na-, K-cyanid, -cyanat und -thiocyanat, besonders bevorzugt K-cyanid, -cyanat und thiocyanat ; die Alkalimetallcarboxylate aliphatischer ($C_1$-$C_8$) Monocarbonsäuren und aromatische Carboxylate, die gegebenenfalls ein oder mehrfach durch Chlor, Brom, eine $C_1$-$C_4$-Alkyl-, Nitro-, Trifluormethyl-, Alkoxygruppe mit 1 bis 4 C-Atomen oder eine Carbalkoxygruppe mit 1 bis 4 C-Atomen substituiert ist, wie z. B. Li-, Na-, K-formiat, -acetat, -caprylat, -isooctanoat, -benzoat, -naphthenate, bevorzugt Li- und K-acetat, -isooctanoat und -benzoat, besonders bevorzugt K-acetat, K-Isooctanoat und Libenzoat ; die Alkalimetallcarbonate, wie z. B. Li-, Na-, K- und Cs-carbonat, besonders bevorzugt Kalium- und Cs-carbonat ; die $C_1$-$C_8$-Monoalkylester-Salze der Kohlensäure, wie z. B. die Alkali- und Erdalkalimetallsalze der Monomethyl-, Monoethyl-, Monobutyl- und Monoisooctylcarbonate, bevorzugt die Li-, K- und Ca-Salze der Monomethyl-, Monoethyl- und Monoisooctylcarbonate, besonders bevorzugt Lithiummonomethylcarbonat und Kaliummonoisooctylcarbonat ; die Oxide der Erdalkalimetalle, des Cer, Bor, Aluminium, Thallium und Antimon, bevorzugt, die Oxide des Magnesiums, Calciums, Aluminiums, Thalliums (ein und dreiwertig) und Antimons (dreiwertig), besonders bevorzugt Calciumoxid, Aluminiumoxid und Antimon (III) oxid ; die Alkalimetallhalogenide, wie z. B. Na- und K-fluorid und -jodid, besonders bevorzugt Kalium-fluorid und Kaliumjodid ; die Methyl-, Ethyl-, n-Butyl- und Isobutylverbindungen des Lithiums, Magnesiums und Aluminiums, bevorzugt n-Butyllithium, Dimethylmagnesium, Trimethylaluminium, Triethylaluminium und Triisobutylaluminium, besonders bevorzugt n-Butyllithium, Triethylaluminium und Triisobutylaluminium.

Als Katalysatoren der allgemeinen Formel (II) seien beispielsweise erwähnt : Thioessigsäureamid, Thiopropionsäureamid, Thiobuttersäureamid, Thiovaleriansäureamid, Thioharnstoff, N-Methylthioharnstoff, N-Ethylthioharnstoff, N,N-Dimethylthioharnstoff und Thiosemicarbazid, besonders bevorzugt Thioessigsäureamid, Thioharnstoff und Thiosemicarbazid.

Als Cokatalysatoren der allgemeinen Formel (III) seien beispielsweise genannt : aliphatische Saüreamide wie Dimethylacetamid, Dimethylpropionsäureamid, cyclische Amide wie Pyrrolidon, Valerolactam, Caprolactam und N-Methylpyrrolidon, besonders bevorzugt Dimethylacetamid, N-Methylpyrrolidon und Caprolactam ; cyclische Amine wie Piperazin, N,N'-Dimethylpiperazin, Bis-(2-hydroxyethyl)-piperazin, 1,4-Diazabicyclo(2,2,2) octan, 1,5-Diazabicyclo(4,3,0)-non-5-en und 1,5-Diazabicyclo-(5,4,0)-undec-7-en, besonders bevorzugt 1,4-Diazabicyclo-(2,2,2)-octan und 1,5-Diazabicyclo-(5,4,0)-undec-7-en ; acyclische und cyclische Harnstoffe wie Harnstoff, N-Methylharnstoff, N-Butylharnstoff, N,N'-Dimethylharnstoff, N,N'-Dibutylharnstoff, N,N'-Diphenylharnstoff, N,N-Dimethylharnstoff, Tetramethylharnstoff, N,N,N'-Trimethylharnstoff, Ethylenharnstoff, N,N'-Dimethylethylenharnstoff, N-Phenylethylenharnstoff, Propylenharnstoff, N,N'-Dimethylpropylenharnstoff, 1,3-Diazacycloheptanon-2 und 1,3-Dimethyl-1,3-diazacycloheptanon-2, besonders bevorzugt Harnstoff, N,N'-Dimethylharnstoff, Ethylenharnstoff und N,N'-Dimethylethylenharnstoff.

Als Cokatalysatoren der allgemeinen Formel (IV) seien beispielsweise genannt : Propriolacton, Butyrolacton, Valerolactan und Caprolacton, besonders bevorzugt Butyrolacton und Caprolacton ; cyclische Ether wie Dioxan, 1,4,7,10-Tetraoxacyclododecan, 1,4,7,10,13-Pentaoxacyclopentadecan, 1,4,7,10,13,16-Hexaoxacyclooctadecan, besonders bevorzugt 1,4,7,10,13-Pentaoxacyclopentadecan und 1,4,7,10,13,16-Hexaoxacyclooctadecan.

Als Cokatalysatoren der allgemeinen Formel (V) seien beispielsweise genannt : Polyethylenglykol, Polypropylenglykol, n-Butanol, tert.-Butanol, iso-Octanol, n-Dodecanol und n-Octadecanol, besonders bevorzugt Polyethylenglykol und iso-Octanol ; Thiole wie 2-Mercaptoethanol, Thiophenol, p-Chlorthiophenol, n-Butanthiol, n-Dodecanthiol, besonders bevorzugt 2-Mercaptoethanol und n-Dodecanthiol.

Im erfindungsgemäßen Verfahren werden die verwendbaren Katalysatorsysteme vorzugsweise als Lösungen eingesetzt.

Im erfindungsgemäßen Verfahren bestehen die Katalysator-systeme zu 50-99,999 Gew.-% (bezogen auf das Gesamgewicht des Katalysatorsystems) aus dem Cokatalysator der allgemeinen Formel (III) bis (V) und zu 0,001 bis 50 Gew.-% (bezogen auf das Gesamtgewicht des Katalysatorsystems) aus dem Katalysator der allgemeinen Formel (I) und (II) zusammengesetzt ; bevorzugt bestehen die Katalysatorsysteme zu 70-99,999 Gew.-% aus dem Cokatalysator und zu 0,001-30 Gew.-% aus dem Katalysator,

besonders bevorzugt zu 80-99,99 Gew.-% aus Cokatalysator und 0,01-20 Gew.-% aus Katalysator.

Im erfindungsgemäßen Verfahren werden die Katalysatorsysteme in Mengen von 0,001-5 Gew.-% (bezogen auf das Gewicht der Gesamtmonomerenmischung), bevorzugt 0,01-4 Gew.-%, besonders bevorzugt 0,01-3 Gew.-% angewendet.

Die Temperaturen, bei denen im erfindungsgemäßen Verfahren die Katalysatorsysteme zur ringöffnenden Copolymerisation monocyclischer Ringcarbonate mit bifunktionellen cyclischen Kohlensäureestern eingesetzt werden, betragen 50 bis 200 °C, bevorzugt 70 bis 170 °C, besonders bevorzugt 80 bis 160 °C.

Als monocyclische Carbonate können in der ringöffnenden Copolymerisation beispielsweise eingesetzt werden :

Carbonate der allgemeinen Formel (VI)

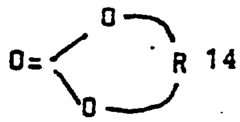

(VI)

worin $R^{14}$ $(CH_2)_n$ mit n=3-6, $—CH_2CH{=}CHCH_2—$, $—CH_2CH_2CH(CH_3)—$, $—CH_2CH_2OCH_2CH_2OCH_2CH_2—$,

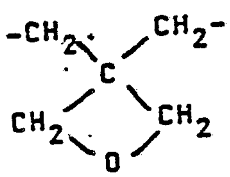 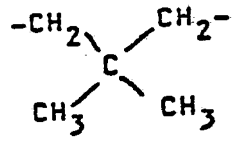

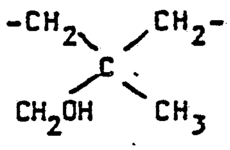 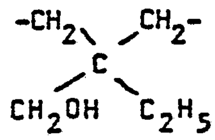

bedeutet,

Carbonate der allgemeinen Formel (VII)

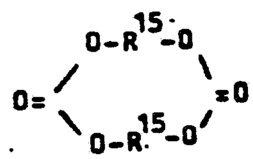

(VII)

worin $R^{15}$ $(CH_2)_n$ mit n=4-12, $—CH_2CH_2OCH_2CH_2—$, $—CH_2CH_2—O—CH_2CH_2—O—CH_2CH_2—$,

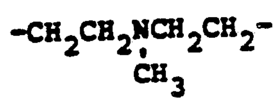

bedeutet, und das Carbonat der allgemeinen Formel (VIII)

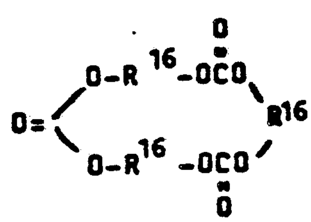

(VIII)

worin $R^{16}$ $—CH_2CH_2OCH_2CH_2—$ bedeutet.

Bevorzugt werden die Carbonate der allgemeinen Formel (VI) verwendet.

Als bifunktionelle, vernetzend wirkende Ringcarbonate können in der Ringöffnenden Polymerisation beispielsweise eingesetzt werden :

Carbonate der allgemeinen Formel (IX)

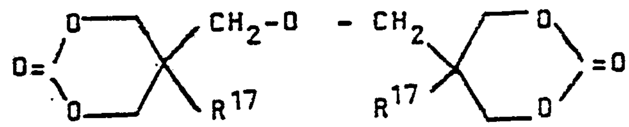

(IX)

worin $R^{17}$ für einen Alkylrest mit 1 bis 4 C-Atomen steht,

Carbonate der allgemeinen Formel (X)

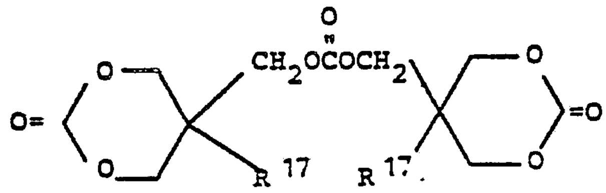

(X)

worin $R^{17}$ die oben angegebene Bedeutung hat,

Carbonate der allgemeinen Formel (XI)

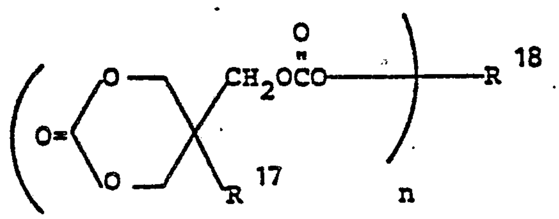

(XI)

worin

$R^{17}$ die oben angegebene Bedeutung hat,

$R^{18}$ für einen Alkylidenrest mit 3 bis 18 C-Atomen, für einen Arylrest mit 6 bis 12 C-Atomen oder für einen Aralkylrest mit 7 bis 24 C-Atomen steht und

n 2, 3 oder 4 bedeutet.

Bevorzugt werden Carbonate der allgemeinen Formel (X) verwendet.

Im erfindungsgemäßen Verfahren werden die bifunktionellen vernetzend wirkende Ringcarbonate in Mengen von 2-50 Gew.-%, bevorzugt 5-20 Gew.-% dem monocyclischen Ringcarbonat zugesetzt, bezogen auf die Gesamtmenge an eingesetzten Carbonaten.

Im erfindungsgemäßen Verfahren werden die cyclischen Carbonate in Substanz ohne Verwendung von Lösungsmitteln durch Zusatz der oben beschriebenen Katalysatorsysteme in den oben angegebenen Mengen bei den oben angegebenen Temperaturen polymerisiert.

Das erfindungsgemäße Verfahren wird bei Normaldruck oder Überdruck, bevorzugt bei Normaldruck durchgeführt.

Der Einsatz der nach dem erfindungsgemäßen Verfahren erhaltenen Duromeren empfiehlt sich überall dort, wo hohe Anforderungen an duromerentypische Eigenschaften wie Wärmeformbeständigkeit und Unempfindlichkeit gegen lösende und quellende Agentien (z. B. Kraft- und Schmierstoffe) gestellt werden und wo darüber hinaus gute mechanische Eigenschaften, insbesondere hohe Zähigkeit notwendig sind. Als Beispiel seien Automobilteile, insbesondere solche aus dem steinschlaggefährdeten Bereich genannt, wie Spoiler, Stoßstangenteile und Kotflügelauskleidungen.

## Beispiele

### Beispiel 1 bis 11

Zu einer Mischung aus 90 Teilen 5,5-Dimethyl-1,3-dioxan-2-on (Neopentylglykolcarbonat) und 10 Teilen 5,5'-(Carbonylbis-(oxy-methylen))-bis-(5-ethyl-1,3-dioxan-2-on) (X mit $R^{17}=C_2H_5$) wird das Katalysatorsystem in unten angegebenen Teilen und Zusammensetzungen bei einer Temperatur der Monomerenschmelze von 120 °C hinzugegeben. Nach jeweils kurzer Zeit (5 bis 30 Minuten) erstarren die anfänglich flüssigen Schmelzen zu klaren nicht mehr verformbaren Polymerisaten von großer Zähigkeit, Elastizität und Festigkeit.

1. Katalysatorsystem (1 Teil) : Lithiumbenzoat 5 %ig in 1,5-Diazabicyclo(5,4,0) undec-7-en
2. Katalysatorsystem (0,5 Teile) : Kalium-tert.-butylat 10 %ig in 1,5-Diazabicyclo(5,4,0) undec-7-en
3. Katalysatorsystem (1 Teil) : Kalium-tert.-butylat 3 %ig in Caprolactam
4. Katalysatorsystem (0,5 Teile) : Kaliumthiocyanat 10 %ig in Caprolactam

5. Katalysatorsystem (1 Teil) : Kaliumcyanid 5 %ig in Ethylenglykol
6. Katalysatorsystem (0,05 Teile) : Kalium-tert.-butylat 10 %ig in Dimethylacetamid
7. Katalysatorsystem (0,5 Teile) : Triisobutylaluminium 1 %ig in Ethylenglykol
8. Katalysatorsystem (0,5 Teile) : Thioharnstoff 5 %ig in 1,5-Diazabicyclo(5,4,0) undec-7-en
9. Katalysatorsystem (0,5 Teile) : Thioacetamid 5 %ig in 1,5-Diazabicyclo(5,4,0) undec-7-en
10. Katalysatorsystem (1 Teil) : Antimon (III) oxid 0,01 %ig in 1,5-Diazabicyclo(5,4,0) undec-7-en
11. Katalysatorsystem (1 Teil) : Lithiummethylcarbonat 2 %ig in Caprolactam

Beispiel 12

Eine Mischung aus 72 Teilen Neopentylglykolcarbonat, 8 Teilen 5,5'-(Carbonylbis-(oxymethylen))-bis-(5-ethyl-1,3-dioxan-2-on) (X mit $R^{17}=C_2H_5$) und 0,8 Teilen eines Katalysatorsystems, bestehend aus Kalium-tert.-butylat (5 Gew.-%) in Caprolactam, wird bei einer Temperatur von 120 °C zu 20 Teilen Glasfaser gegeben. Nach kurzer Zeit wird ein klares glasfaserverstärktes Polymerisat erhalten.

Beispiel 13 (Vergleich gegenüber DE-OS 3 103 135 und 3 204 078, in denen Thallium-Verbindungen zur Polymerisation cyclischer Carbonate verwendet werden)

Eine Mischung aus 72 Teilen Neopentylglykolcarbonat, 8 Teilen 5,5'-(Carbonylbis-(oxymethylen))-bis-(5-ethyl-2,3-dioxan-2-on) (X mit $R^{17}=C_2H_5$) und 0,2 Teilen Thallium(I)-acetat wird bei 120 °C zu 20 Teilen Glasfaser gegeben. Es tritt selbst nach Reaktionszeiten >2 Stunden keine Härtung ein.

Die Beispiele 14 und 15 sollen zeigen, daß ein Cokatalysator im Katalysatorsystem notwendig ist.

Beispiel 14 (Vergleich)

Zu einer Mischung aus 90 Teilen Neopentylglykolcarbonat und 10 Teilen 5,5'-(Carbonylbis-(oxymethylen))-bis-(5-ethyl-1,3-dioxan-2-on) (X mit $R^{17}=C_2H_5$) werden 0,5 Teile Lithiummethylcarbonat bei 120 °C gegeben. Ein großer Teil des Katalysators wird von einem Gel eingekapselt. Die Härtezeit ist im Vergleich zu Beispiel 11 verlängert und das Polymerisat uneinheitlich.

Beispiel 15 (Vergleich)

Zu der Monomerenmischung aus Beispiel 14 werden bei 120 °C 0,5 Teile Thioharnstoff gegeben. Es tritt selbst nach Reaktionszeiten >1 Stunde keine Härtung ein.

**Patentanspruch**

Verfahren zur Herstellung von duromeren, gegebenenfalls verstärkten aliphatischen Polycarbonaten durch ringöffnende Copolymerisation von monocyclischen Ringcarbonaten und bifunktionellen vernetzend wirkenden Ringcarbonaten, dadurch gekennzeichnet, daß Katalysatorsysteme bestehend aus einem Katalysator der Formel (I)

$$X(R^1)_y \qquad (I),$$

worin

X ein Ion der Gruppen IA-IIIA, IIIB oder VA des Periodensystems ist,

$R^1$ einen $C_1$-$C_8$-Alkylalkoholat-, $C_7$-$C_{15}$-Aralkylalkoholat-, $C_4$-$C_{18}$-Thiolat-, Cyanid-, Cyanat-, Thiocyanat-, aliphatischen ($C_1$-$C_8$) Carboxylat-, aromatischen (gegebenenfalls durch Brom, Chlor, eine $C_1$-$C_4$-Alkyl-, Nitro-, Trifluormethyl-, Alkoxygruppe mit 1 bis 4 C-Atomen oder Carbalkoxygruppe substituierten) Carboxylat-, Carbonat-, $C_1$-$C_8$-Alkylcarbonat-, Oxid-, Halogenid, $C_1$-$C_4$-Alkyl-Rest,

Y 1, 2, 3 oder 4

bedeuten

oder einem Katalysator der Formel (II)

$$R^2-\overset{\overset{S}{\|}}{C}-NH_2 \qquad (II)$$

worin $R^2$ $C_1$-$C_4$-Alkyl, $-NH_2$, $-NH$-Alkyl($C_1$-$C_4$), $-N$(Alkyl($C_1$-$C_4$))$_2$, $-NHNH_2$ bedeutet, und einem Cokatalysator, ausgewählt aus der Gruppe, welche einer der Formeln IIIa, aliphatischen Säureamiden,

$$R^3-\overset{\overset{O}{\|}}{C}-NR^4R^5 \qquad (IIIa)$$

in welcher
$R^3$ für $C_1$-$C_5$-Alkyl,
$R^4$ und $R^5$ für Wasserstoff, $C_1$-$C_4$-Alkyl stehen,
IIIb, cyclischen Amiden

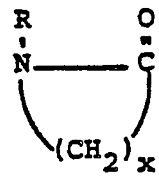

(IIIb)

in welcher
$R^4$ die bei Formel IIIa angegebene Bedeutung hat und
X für eine ganze Zahl von 3 bis 6 steht,
IIIc, cyclischen Aminen,

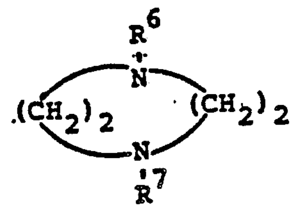

(IIIc)

in welcher
$R^6$ und $R^7$ für Wasserstoff, $-CH_3$, $-C_2H_4OH$ oder gemeinsam für eine gesättigte Methylenkette mit 2 bis 4 C-Atomen stehen,
IIId, bicyclischen Amidinen,

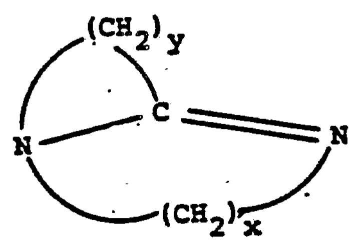

(IIId)

in welcher X, Y für eine ganze Zahl von 2 bis 5 steht, oder IIIe, acyclischen und cyclischen Harnstoffen

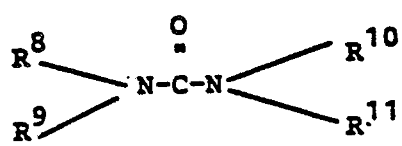

(IIIe)

in welcher $R^8$ bis $R^{11}$ Wasserstoff, $C_1$-$C_4$-Alkyl, $C_6$-$C_{10}$-Aryl bedeuten, wobei gegebenenfalls die Stickstoffatome über zwei Reste $R^8$, $R^{10}$ bzw. $R^9$, $R^{11}$ über eine $C_2$ bis $C_4$ Kette miteinander zu einem Ring verknüpft sein können, entsprechen, oder der allgemeinen Formel (IV)

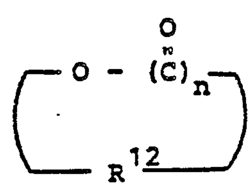

(IV)

worin
$R^{12}$ $-(CH_2)_s-$ mit s=2-5 für den Fall n=1 und $-CH_2CH_2O)_t-CH_2CH_2-$ mit t=1-6 für den Fall n=0 und
n 0 oder 1 bedeuten,
oder der Formel (V)

$R^{13}-ZH$ (V),

worin

$R^{13}$ $-CH_2CH_2OH$, $-(CH_2CH_2)_v-OH$, 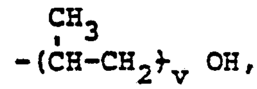

$C_4$-$C_{12}$-Alkyl oder einen Phenylring (gegebenenfalls durch Brom, Chlor, eine $C_1$-$C_4$-Alkyl-, Nitro-, Trifluormethyl-, Alkoxygruppe mit 1 bis 4 C-Atomen oder Carbalkoxygruppe substituiert)

v 1-200,

Z 0 und S bedeuten,

verwendet werden.

**Claim**

Process for the preparation of duromeric, optionally reinforced aliphatic polycarbonates by ring opening copolymerisation of monocyclic ring carbonates and bifunctional ring carbonates which have a cross-linking action, characterised in that catalyst systems are used, consisting of a catalyst corresponding to the following formula (I):

$$X(R^1)_y \quad (I)$$

wherein

X is an ion of groups IA-IIIA, IIIB or VA of the periodic system,

$R^1$ denotes a $C_1$-$C_8$ alkylalcoholate, $C_7$-$C_{15}$ aralkylalcoholate, $C_4$-$C_{18}$ thiolate, cyanide, cyanate, thiocyanate, aliphatic ($C_1$-$C_8$) carboxylate, aromatic (optionally substituted by bromine, chlorine, a $C_1$-$C_4$ alkyl, nitro, trifluoromethyl, alkoxy group with 1 to 4 carbon atoms or carbalkoxy group) carboxylate, carbonate, $C_1$-$C_8$ alkyl-carbonate, oxide, halide or $C_1$-$C_4$ alkyl group and

Y denotes 1, 2, 3 or 4

or a catalyst of the following formula (II):

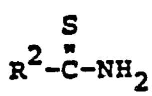

(II)

wherein $R^2$ denotes $C_1$-$C_4$ alkyl, $-NH_2$, $-NH$-alkyl($C_1$-$C_4$), $-N$(alkyl($C_1$-$C_4$))$_2$ or $-NHNH_2$ and a cocatalyst selected from the group of compounds corresponding to one of the following formulae: Formula IIIa, aliphatic acid amides:

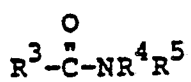

(IIIa)

wherein

$R^3$ stands for $C_1$-$C_5$ alkyl and

$R^4$ and $R^5$ stand for hydrogen or $C_1$-$C_4$ alkyl,

Formula IIIb, cyclic amides:

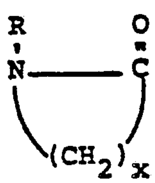

(IIIb)

wherein

$R^4$ has the meaning indicated in Formula IIIa and

X stands for an integer with a value from 3 to 6,

Formula IIIc, cyclic amines:

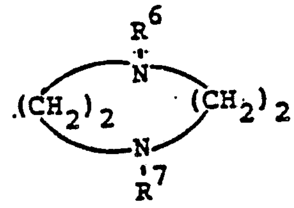

(IIIc)

wherein

$R^6$ and $R^7$ stand for hydrogen, $-CH_3$, $-C_2H_4OH$, or together they stand for a saturated methylene chain having 2 to 4 carbon atoms,

Formula IIId, bicyclic amidines :

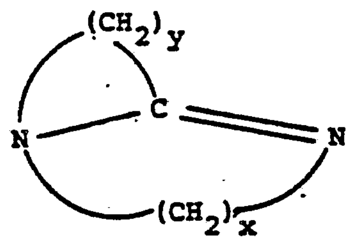

(IIId)

wherein X and Y stand for integers from 2 to 5, or formula IIIe, acyclic and cyclic ureas :

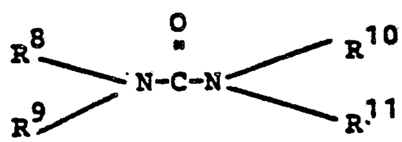

(IIIe)

wherein $R^8$ to $R^{11}$ denote hydrogen, $C_1$-$C_4$ alkyl or $C_6$-$C_{10}$ aryl, and the nitrogen atoms are optionally linked together through two groups $R^8$, $R^{10}$ or $R^9$, $R^{11}$ by way of a $C_2$ to $C_4$ chain to form a ring or corresponding to the general formula (IV) :

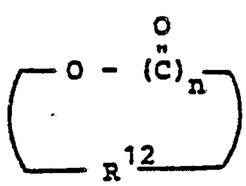

(IV)

wherein

$R^{12}$ denotes $-(CH_2)_s-$ wherein s=2-5 when n=1 and $-(CH_2CH_2O)_t-CH_2CH_2-$ wherein t=1-6 when n=0 and

n denotes 0 or 1,

or corresponding to the general formula (V) :

$$R^{13}-ZH \qquad (V)$$

wherein

$R^{13}$ denotes $-CH_2CH_2OH$, $-(CH_2CH_2)_v-OH$, $-(CH(CH_3)-CH_2)_v-OH$,

$C_4$-$C_{12}$ alkyl or a phenyl ring (optionally substituted by bromine, chlorine, a $C_1$-$C_4$ alkyl, nitro, trifluoromethyl or alkoxy group with 1 to 4 carbon atoms or with a carbalkoxy group)

v denotes 1-200 and

Z denotes 0 and S.

**Revendication**

Procédé de préparation de polycarbonates aliphatiques duromères, éventuellement renforcés, par

copolymérisation avec ouverture du cycle de carbonates monocycliques et de carbonates cycliques bifonctionnels à effet réticulant, caractérisé en ce que l'on utilise des systèmes catalyseurs consistant en un catalyseur de formule I

$$X(R^1)_y \qquad (I)$$

dans laquelle

X représente un ion des groupes IA à IIIA, IIIB ou VA de la Classification Périodique des Eléments,

$R^1$ représente un radical d'alcoolate alkylique en $C_1$-$C_8$, d'alcoolate aralkylique en $C_7$-$C_{15}$, de thiolate en $C_4$-$C_{18}$, de cyanure, de cyanate, de thiocyanate, de carboxylate aliphatique en $C_1$-$C_8$, de carboxylate aromatique (éventuellement substitué par le brome, le chlore, un groupe alkyle en $C_1$-$C_4$, nitro, trifluorométhyle, alcoxy en $C_1$-$C_4$ ou carbalcoxy), de carbonate, d'alkyl-carbonate en $C_1$-$C_8$, d'oxyde, d'halogénure, un radical alkyle en $C_1$-$C_4$,

Y est égal à 1, 2, 3 ou 4,

ou un catalyseur de formule II

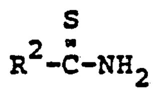

(II)

dans laquelle $R^2$ représente un groupe alkyle en $C_1$-$C_4$, $—NH_2$, —NH-alkyle en $C_1$-$C_4$, —N-(alkyle en $C_1$-$C_4$)$_2$, $—NHNH_2$, et un co-catalyseur choisi dans le groupe consistant en les amides aliphatiques de formule IIIa

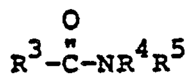

(IIIa)

dans laquelle

$R^3$ représente un groupe alkyle en $C_1$-$C_5$,

$R^4$ et $R^5$ représentent l'hydrogène ou des groupes alkyle en $C_1$-$C_4$, les amides cycliques de formule IIIb

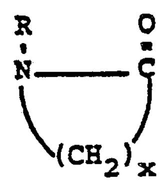

(IIIb)

dans laquelle

$R^4$ a les significations indiquées en référence à la formule IIIa, et

X représente un nombre entier de 3 à 6,

les amines cycliques de formule IIIc

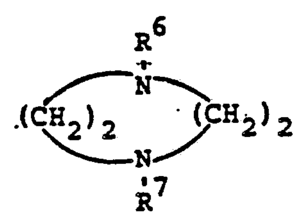

(IIIc)

dans laquelle

$R^6$ et $R^7$ représentent l'hydrogène, des groupes $—CH_3$, $—C_2H_4OH$ ou forment ensemble une chaîne méthylénique saturée en $C_2$-$C_4$,

les amidines bicycliques de formule IIId

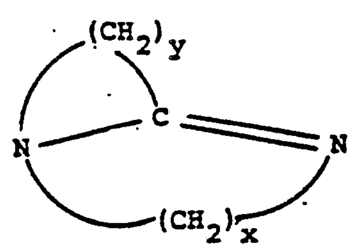

(IIId)

dans laquelle X et Y représentent des nombres entiers de 2 à 5, ou des urées acycliques et cycliques de formule IIIe

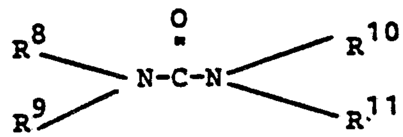

(IIIe)

dans laquelle $R^8$ à $R^{11}$ représentent l'hydrogène, des groupes alkyle en $C_1$-$C_4$, aryle en $C_6$-$C_{10}$, les atomes d'azote pouvant éventuellement être reliés entre eux avec formation d'un cycle par l'intermédiaire de deux groupes $R^8$, $R^{10}$ ou $R^9$, $R^{11}$ et formation d'une chaîne en $C_2$-$C_4$, ou de formule IV

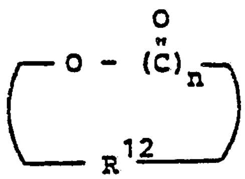

(IV)

dans laquelle

$R^{12}$ représente $-(CH_2)_s$ avec s=2 à 5 dans le cas où n=1, et $-(CH_2CH_2O)_t-CH_2CH_2-$ avec t=1 à 6 dans le cas où n=0, et

n est égal à 0 ou 1,

ou de formule V

$$R^{13}-ZH \qquad (V)$$

dans laquelle

$R^{13}$ représente $-CH_2CH_2OH$, $-(CH_2CH_2)_v-OH$, $-(CH(CH_3)-CH_2)_v-OH$

un groupe alkyle en $C_4$-$C_{12}$ ou un cycle phényle (éventuellement substitué par le brome, le chlore, un groupe alkyle en $C_1$-$C_4$, nitro, trifluorométhyle, alcoxy en $C_1$-$C_4$ ou carbalcoxy)

v est un nombre de 1 à 200, et

Z représente O ou S.